Europäisches Patentamt

(19) European Patent Office

Office européen des brevets

(11) Numéro de publication: **0 084 004**

**A1**

(12) **DEMANDE DE BREVET EUROPEEN**

(21) Numéro de dépôt: 83400025.9

(22) Date de dépôt: 05.01.83

(51) Int. Cl.³: **G 01 S 13/86**

(30) Priorité: 11.01.82 FR 8200293

(43) Date de publication de la demande:
20.07.83 Bulletin 83/29

(84) Etats contractants désignés:
BE CH DE GB IT LI NL SE

(71) Demandeur: SOCIETE D'ETUDES RECHERCHES ET
CONSTRUCTIONS ELECTRONIQUES SERCEL
Avenue du Bel Air Zone Industrielle
F-44470 Carquefou(FR)

(72) Inventeur: Rabian, Jean-Marcel
19, allée des Loriots St. Luce sur Loire
F-44470 Carquefou(FR)

(72) Inventeur: Charrier, Daniel
19, rue du Plessis
F-44880 Sautron(FR)

(74) Mandataire: Martin, Jean-Jacques et al,
Cabinet REGIMBEAU 26, Avenue Kléber
F-75116 Paris(FR)

(54) **Procédé et équipement de radionavigation mixte avec distances et pseudo-distances.**

㉗ Au moins deux balises émettent sélectivement des radiosignaux porteurs de marque-temps synchrones. Le mobile porte un équipement capable (203) d'émettre une marque-temps asynchrone. L'une, élue, des balises renvoie cette marque-temps qui est reçue (205), le temps d'aller et retour (208) représentant le double de 2RR de la distance du mobile à la balise élue. La réception (215 ; 215') des radiosignaux synchrones donne des pseudo-distances qui peuvent être corrigées compte tenu de la distance 2RR.

FIG. 12

Croydon Printing Company Ltd.

EP 0 084 004 A1

PROCEDE ET EQUIPEMENT DE RADIONAVIGATION MIXTE AVEC
DISTANCES ET PSEUDO-DISTANCES.

La présente invention concerne la radionavigation, plus précisément la détermination de la position
de mobiles par l'intermédiaire du temps de propagation
d'ondes radioélectriques, ou radiosignaux. Ces radiosignaux vont transiter entre des balises fixes (ou d'évolution connue) et les mobiles, ainsi qu'en sens inverse
dans certains cas.

Pour mesurer leur temps de propagation, on
définit sur les radiosignaux des marques-temps, généralement périodiques, qui peuvent être, notamment :
- simplement la phase d'une onde de fréquence pure constituant telle quelle le radiosignal ;
- une modulation par impulsions périodiques de la fréquence porteuse du radiosignal ; ou
- une modulation périodique plus élaborée, dont l'une
  des plus avantageuses est la modulation par sauts de
  phase (classiquement, inversion de phase) selon un code
  répétitif connu, de préférence quasi-aléatoire ou pseudo-
  aléatoire.

Certains modes de radionavigation, qui font
émettre les mobiles, ne sont accessibles qu'à un nombre
limité d'usagers. A la base, un radiosignal se propage
en aller-retour entre un mobile et une balise. La mesure
du temps d'aller-retour permet d'accéder à la distance
mobile-balise (la vitesse de propagation des ondes étant
supposée connue).

A partir de sa distance à la balise, le mobile
se situe, aux erreurs près, sur un cercle centré sur la
balise ("mode circulaire"). Un second cercle centré sur
une autre balise permet une détermination de position,
sous réserve du problème d'ambiguïté connu de l'homme de
l'art, et soluble de diverses manières.

Un autre mode de radionavigation est utilisable
par un nombre illimité de mobiles, car il ne fait émettre
que les balises.

Comme les balises sont fixes, ou d'évolution connue, on peut "synchroniser" leurs marques-temps entre elles de façon qu'elles soient rapportées à une horloge maîtresse commune, qui est généralement l'horloge de l'une d'entre elles, dite balise maîtresse. "Synchroniser" vise ici aussi bien l'établissement d'une coïncidence temporelle exacte entre toutes les marques-temps (à leur période près) que le cas où les marques-temps des balises-esclaves sont décalées par rapport à celle de la balise maîtresse, ce décalage pouvant par exemple représenter l'équivalent-temps de la distance entre la balise-esclave et la balise maîtresse.

En recevant le radiosignal d'une balise, le mobile peut déterminer sa "pseudo-distance" à l'égard de la balise. Le mot "pseudo-distance" reflète le fait que le mobile va comparer les marques-temps du radiosignal qu'il reçoit à sa propre horloge : la pseudo-distance est dont représentative de la distance balise-mobile, augmentée algébriquement de l'équivalent-distance (inconnu a priori) entre l'horloge maîtresse des balises et celle du mobile. Sur la surface terrestre, l'obtention de trois pseudo-distances permet de déterminer, aux erreurs près, la position du mobile, là encore avec un problème, soluble, d'ambiguïté. Ce mode de radionavigation est souvent dénommé hyperbolique, car le mobile peut alors se situer sur des hyperboles ayant pour foyers les balises prises par paires. Toutes choses égales par ailleurs, l'incertitude sur la détermination de position est ici plus grande que pour un mode de radionavigation circulaire.

La demanderesse a déjà proposé et commercialisé sous le nom de SYLEDIS un système de radionavigation dont les balises permettent à la fois un fonctionnement en mode circulaire pour un nombre limité d'usagers et un fonctionnement en mode hyperbolique pour tous les autres usagers.

Ce système SYLEDIS fonctionne selon le procédé suivant :

- on définit d'une manière prédéterminée une séquence de créneaux-temps répétitive,

- au moins trois balises émettent, dans trois créneaux-temps respectifs, des radiosignaux "synchrones", c'est-à-dire définissant des marques-temps rapportées à une horloge maîtresse commune, tandis que tout mobile peut recevoir et identifier ces radiosignaux synchrones, en déduire ses pseudo-distances à l'égard des balises, et par là déterminer sa position sous réserve d'un contour d'incertitude d'un premier type, et

- d'autres créneaux-temps sont consacrés de façon prédéterminée à un dialogue pré-organisé de radiosignaux appel-retour "asynchrones" entre un nombre limité de mobiles spécifiés et les balises, dialogue où chaque mobile spécifié émet un radiosignal d'appel définissant une marque-temps qui lui est propre, où chaque balise lui répond, à son tour, par un radiosignal retour définissant une marque-temps liée à celle qu'elle a reçue du mobile spécifié concerné, puis où chaque mobile spécifié reçoit les marques-temps retour qui le concernent, en déduit sa distance à chacune des balises, puis sa position, sous réserve d'un contour d'incertitude d'un second type , le plus souvent plus petit que le premier.

Ce système est intéressant en ce que pour l'approche, ou pour des besoins de précision moyenne, le positionnement par pseudo-distances (en abrégé PR, pour pseudo-range) est suffisant, et accessible à tous.

A côté de cela, le même système de radionavigation permet à un nombre limité de mobiles d'accéder à un positionnement plus précis, par distance vraie (en abrégé RR pour range-range).

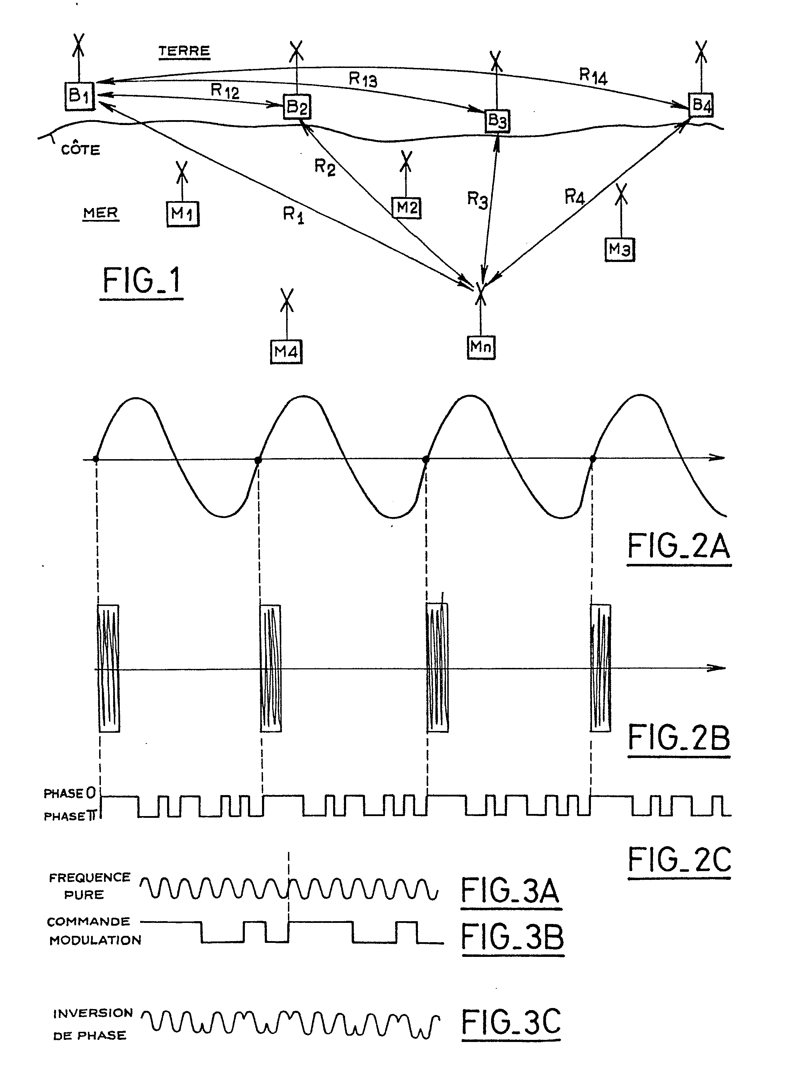

Par exemple, pour un format de séquence à 30 créneaux-temps (figure 1), et quatre balises :

- deux créneaux sont consacrés à la synchronisation (entre balises, et de format) ;
- quatre créneaux servent respectivement aux émissions "synchrones" ou hyperboliques des quatre balises ;
- quatre créneaux servent aux émissions d'appel en circulaire des quatre mobiles spécifiés ; et seize créneaux servent aux réponses respectives de chacune des quatre balises à chacun des quatre mobiles ;
- quatre créneaux restent disponibles, comme service.

Ce système SYLEDIS donne toute satisfaction. Cependant, un problème est que le nombre de créneaux-temps de la séquence croît très vite avec le nombre des mobiles spécifiés admis à travailler en mode circulaire appel-retour. La présente invention vient apporter une solution très élégante à ce problème.

Selon un premier aspect de l'invention, le dialogue précité au niveau des radiosignaux circulaires appel-retour est modifié.

D'une manière prévue à l'avance, une seule des balises répond à chaque mobile spécifié. Chaque mobile spécifié reçoit le radiosignal retour de cette balise et par ailleurs les radiosignaux synchrones de toutes les balises. Ledit mobile compare sa distance et sa pseudodistance à l'égard de la même balise, puis corrige en conséquence la position donnée par l'ensemble des pseudodistances, la position corrigée étant alors assortie d'un contour d'incertitude comparable à celui du second type.

Ceci permet, à précision sensiblement constante, de multiplier le nombre des mobiles spécifiés admis à travailler conjointement avec les balises, pour une séquence de créneaux-temps donnée.

Il faut remarquer dans cette description de principe que le nombre maximum de balises n'est pas limité, il faut aussi noter particulièrement que selon l'invention une seule balise peut répondre à un mobile spécifié, cette même balise transmettant aussi un signal synchrone et qu'il suffit d'une seule balise supplémentaire transmettant un signal synchrone pour qu'il soit possible au mobile spécifié de déterminer sa position.

En d'autres termes, selon l'invention, le dispositif minimum basé au sol peut comprendre seulement deux balises : l'une transmettant un signal RR + PR, l'autre un signal PR.

Bien qu'on se réfère ci-dessus, pour la comparaison à la technique antérieure, au cas où les radiosignaux sont identifiables par leur multiplexage temporel sur une séquence de créneaux-temps répétitive et prédéterminée, l'Homme de l'Art comprendra que l'identification des émissions des balises et mobiles du système peut aussi se faire en tout ou en partie, par multiplexage fréquentiel :
- ou bien chaque émission d'une marque temps (balise ou mobile) est identifiée par sa fréquence porteuse, différente de toutes les autres ;
- ou bien les émissions sont identifiées par la combinaison d'une pluralité de fréquences porteuses et des créneaux-temps d'une séquence répétitive.

Comme précédemment indiqué, la marque-temps peut être soit la phase d'une fréquence pure du radio-signal, soit une modulation périodique prédéterminée du radiosignal, telle qu'une modulation par impulsions, ou de préférence une modulation par sauts ou glissements de phase selon un code préétabli.

Selon un autre aspect de l'invention, on utilise plus de trois balises (bien que trois balises soient suffisantes pour déterminer une position en mode PR). L'information obtenue à l'aide de la quatrième balise (éventuellement à l'aide d'autres balises encore) permet de connaître plus précisément l'écart entre l'horloge du mobile et l'horloge maîtresse des balises. On peut donc également, par ce moyen, diminuer la taille du contour d'incertitude du premier type associé au positionnement PR.

Au niveau des balises, la mise en oeuvre de l'invention suppose simplement une modification de la définition du dialogue RR entre mobiles spécifiés et balises : à un mobile spécifié donné, on fait correspondre maintenant une seule balise. Cette définition du dialogue peut se faire par simple convention préalable, ou par une autre liaison radioélectrique, phonique ou autre, ou encore en utilisant les créneaux de service, par exemple. En pratique, chaque mobile recherchera le dialogue RR avec la balise qu'il reçoit le mieux, compte-tenu notamment de la géométrie du système balises- mobiles ainsi que d'éventuelles perturbations radioélectriques.

De son côté, l'équipement de radionavigation incorporé à chaque mobile (spécifié) comporte classiquement :
- une horloge locale,
- un générateur de format apte à définir la suite de créneaux-temps répétitive,
- des moyens de réception radio-fréquence, actionnés sur des créneaux-temps déterminés, ces moyens de réception fournissant des marques-temps sélectivement pour chaque créneau-temps actif,
- des moyens pour mesurer des pseudo-distances à partir de l'écart entre chacune des marques-temps synchrones liées à l'horloge maîtresse et provenant des différentes balises et l'horloge locale du mobile,
- et des moyens de traitement pour définir la position du mobile à partir de ces pseudo-distances.

Selon l'invention, cet équipement comporte en outre des moyens d'émission radio-fréquence, sur un créneau-temps déterminé, d'un signal définissant une marque-temps d'appel propre au mobile ; les moyens de réception fournissent, sur un autre créneau-temps, la marque-temps retour renvoyée par l'une des balises ; on prévoit des moyens pour mesurer la distance du mobile à l'égard de cette balise, à partir de l'écart entre la marque-temps d'appel et la marque-temps retour ; et les moyens de traitement comportent des moyens pour corriger la position donnée par l'ensemble des pseudo-distances en fonction de la comparaison entre la distance et la pseudo-distance relatives à la même balise.

Bien entendu, cet équipement de réception est capable de fonctionner de manière plus large, où le même mobile procède à un dialogue aller-retour avec plusieurs balises.

Inversement, dans le cas où plus de trois balises sont utilisées, on a vu que l'information supplémentaire obtenue permet de mieux connaître l'écart entre l'horloge du mobile et l'horloge maîtresse des balises. Cette information supplémentaire est déjà suffisante pour améliorer la précision de localisation (diminuer le contour d'incertitude), par exemple lorsque le dialogue aller-retour avec certaines balises est temporairement impossible.

Selon un autre aspect de l'invention, on incorpore aux moyens de traitement de l'équipement du mobile un filtrage numérique de Kalman perfectionné, qui permet d'une manière générale l'utilisation optimale des mesures disponibles, qu'elles soient de type RR ou PR, voire même d'autres types d'informations disponibles sur la position du mobile ou de facteurs influant sur celle-ci (sa vitesse, son accélération, les courants marins dans le cas d'un navire, ou les vents, par exemple).

De la même manière que dans le procédé, le mobile peut aussi identifier les émissions, en tout ou en partie, selon leur fréquence porteuse.

D'autres caractéristiques et avantages de l'invention apparaîtront à la lecture de la description détaillée qui va suivre, ainsi que sur les dessins, l'ensemble donné pour illustrer, à titre d'exemple préférentiel non limitatif, un mode de réalisation particulier de l'invention. Sur les dessins :

- la figure 1 illustre sous forme très simplifiée un exemple de système de radionavigation côtier comportant quatre balises et des mobiles embarqués sur des navires ;

- les figures 2A à 2C illustrent trois exemples de radiosignaux définissant des marques-temps ;

- les figures 3A à 3C illustrent comment on module une fréquence porteuse par inversion de phase selon un code pseudo-aléatoire ;

- les figures 4A à 4C illustrent schématiquement l'obtention de radiosignaux porteurs de marques-temps définies aux figures 2A à 2C, respectivement ;

- la figure 5 est un exemple de séquence de créneaux-temps connue, utilisable pour le système de la figure 1 ;

- les figures 6 et 7 sont respectivement les schémas de principe, connus, de la balise maîtresse et de l'une des balises esclaves de la figure 1 ;

- les figures 8 et 9 sont respectivement les schémas de principe d'un mobile actif et d'un mobile passif de la figure 1 ;

- la figure 10 est un schéma de principe d'un mobile mixte selon la présente invention ;

- la figure 11 illustre la séquence des créneaux-temps, utilisable selon la présente invention avec le système de la figure 1 ;

- la figure 12 illustre un schéma de variante de l'équipement dés mobiles de la figure 10 et

- la figure 13 illustre des contours d'erreurs obtenus selon la technique antérieure et selon la présente invention.

La figure 1 illustre schématiquement les éléments d'un système de radionavigation, à savoir :

- quatre balises fixes B1 à B4 ;

- des mobiles M1 à M4 ainsi que Mn.

Les figures 2A à 2C illustrent trois manières de transmettre des marques-temps dans un radio-signal :

- phase d'une onde pure (figure 2A), la marque-temps étant par exemple la transition des valeurs négatives aux valeurs positives (marquée d'un point) ;

pulsions périodiques modulant en tout ou rien une fréquenporteuse (figure 2B) ;
équence porteuse modulée en phase selon un code pseudo-
toire périodique (figure 2C, où la période du code est la
que celle des impulsions de la figure 2B ou de la fréice pure de la figure 2A). Seul le code pseudo-aléatoire
illustré sur la figure 2C, tandis que la figure 3C montre
ient une onde pure (figure 3A) est modulée par inversion de
se selon un code binaire (figure 3B) pseudo-aléatoire,
i n'étant pas limitatif et pouvant s'étendre à tous systède modulation d'amplitude et de phase et leurs combinai-
s.

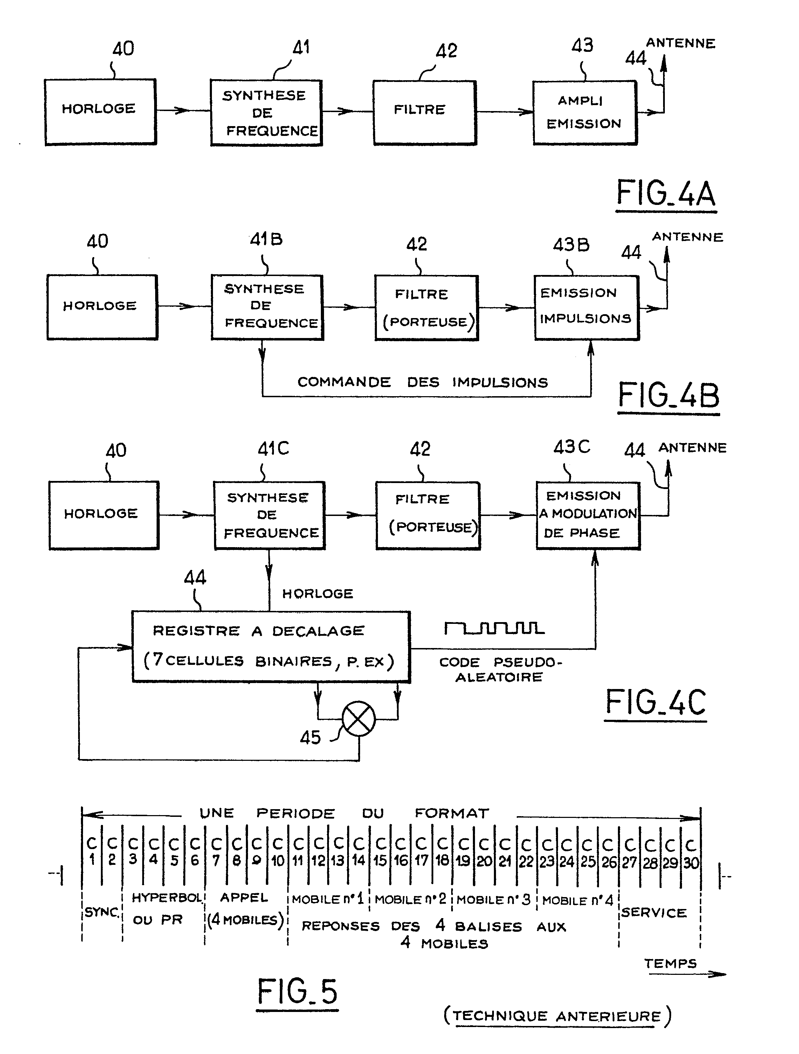

La figure 4A montre fonctionnellement comment émettre
onde pure de phase liée à une horloge (40) dont la fréquenest éventuellement synthétisée (41), puis filtrée (42),
lifiée (43) et émise (antenne 44).

La figure 4B concerne le cas d'une émission impulnnelle (figure 2B). Ici la synthèse 41B fournit aussi la
quence des impulsions qui commandent en tout ou rien l'amficateur d'émission 43B.

La figure 4C vise le cas d'une modulation codée de la
se (figure 2C). La fréquence d'impulsions fournie par la
thèse 41C excite, comme horloge, un registre à décalage 44.
ui-ci, qui a par exemple 7 étages, voit ses deux derniers
ges réunis dans un élément logique 45 (OU exclusif par exle) puis ramenés sur l'entrée. Initialement le registre est
irgé d'un mot prédéterminé. Au rythme des impulsions
iorloge, il en sort alors un code pseudo-aléatoire
: 127 bits ici). Et ce code va commander une modulation
phase dans le circuit d'émission 43C.

Dans la suite on se réfère à titre préférentiel
in mode de réalisation à codage par sauts de phase
riodiques, et on utilisera donc le mot "code" pour
signer la marque-temps. Ceci étant l'homme de l'art
mprendra que dans les figures et la description qui

suivent, le code peut tout aussi bien être constitué d'impulsions émises périodiques, ou même de la phase du radio-signal ou d'une fréquence qu'il contient.

La figure 5 vient maintenant rappeler un exemple de format d'émission, utilisé en particulier dans le système SYLEDIS de la demanderesse :

- les deux créneaux C1 et C2 servent à la synchronisation des balises sur l'horloge maîtresse (on admettra que c'est celle de la balise B1) ;

- les quatre créneaux C3 ‿ C6 servent aux émissions synchrones ou PR des quatre balises pour les mobiles passifs ;

- les quatre créneaux C7 à C10 servent aux appels respectifs des quatre mobiles actifs admis à travailler en même temps avec les quatre balises ;

- les seize créneaux C11 à C26 servent aux réponses respectives des quatre balises à chacun de ces quatre appels ;

- restent enfin quatre créneaux disponibles C27 à C30, qui peuvent être des créneaux de service.

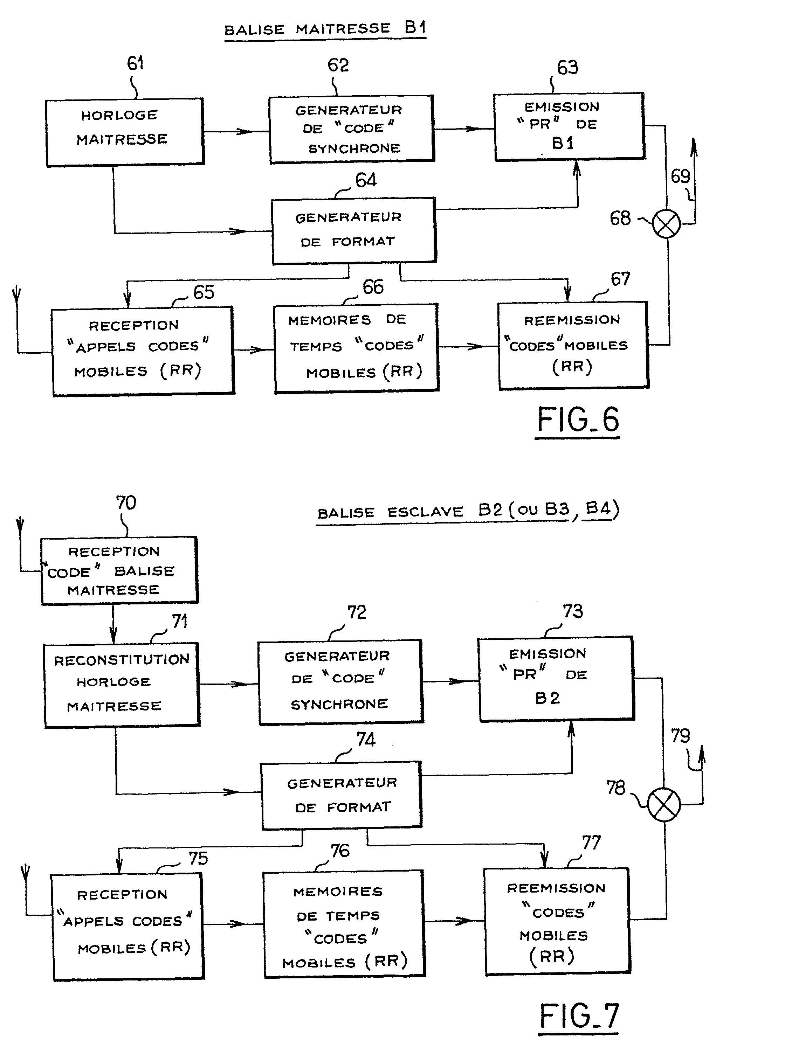

Les figures 6 et 7 donnent les schémas fonctionnels des balises.

Pour la balise maîtresse B1 (figure 6), l'horloge maîtresse 61 alimente le générateur de code "synchrone" 62 (41 figure 4A ou 41B figure 4B ou de préférence 41C, 44 et 45 figure 4C), ainsi qu'un générateur de format 64. Au créneau C3 (figure 5), le générateur 64 autorise le circuit 63 à émettre le radio-signal B1, par le duplexeur 68 et l'antenne 69.

Aux créneaux C7 à C10, le circuit 65 reçoit et décode les appels (RR) des mobiles actifs M1 à M4, pour en mémoriser les temps d'arrivée (66). Cette mémorisation s'effectue par entretien d'une horloge ou d'un générateur de code périodique mis en coïncidence avec le code reçu ("asynchrone" par rapport à l'horloge), ou par simple mesure de l'écart entre chaque code reçu et l'horloge locale (ici 61).

Enfin, aux créneaux C11, C15, C19 et C23, le circuit 67 de la balise maîtresse B1 renvoie leurs codes de retour respectifs aux mobiles actifs M1 à M4. On voit bien que le temps d'aller-retour d'un code émis par un mobile actif est relié au temps de trajet aller-retour, augmenté d'un nombre entier de périodes du code (c'est l'ambiguïté déjà mentionnée).

Une balise esclave (B2 par exemple, figure 7) a la même constitution générale (les références numériques sont augmentées de 10 unités), avec, en outre, le circuit 70, qui pendant les créneaux C1 et C2, synchronise le générateur de format 74 et pendant le créneau C3 synchronise l'horloge locale de la balise B2 sur l'horloge maîtresse (Bloc "Reconstitution de l'horloge maîtresse"71). La reconstitution peut se faire avec ou sans incorporation du temps de trajet des ondes de B1 à B2 dans l'horloge 71.

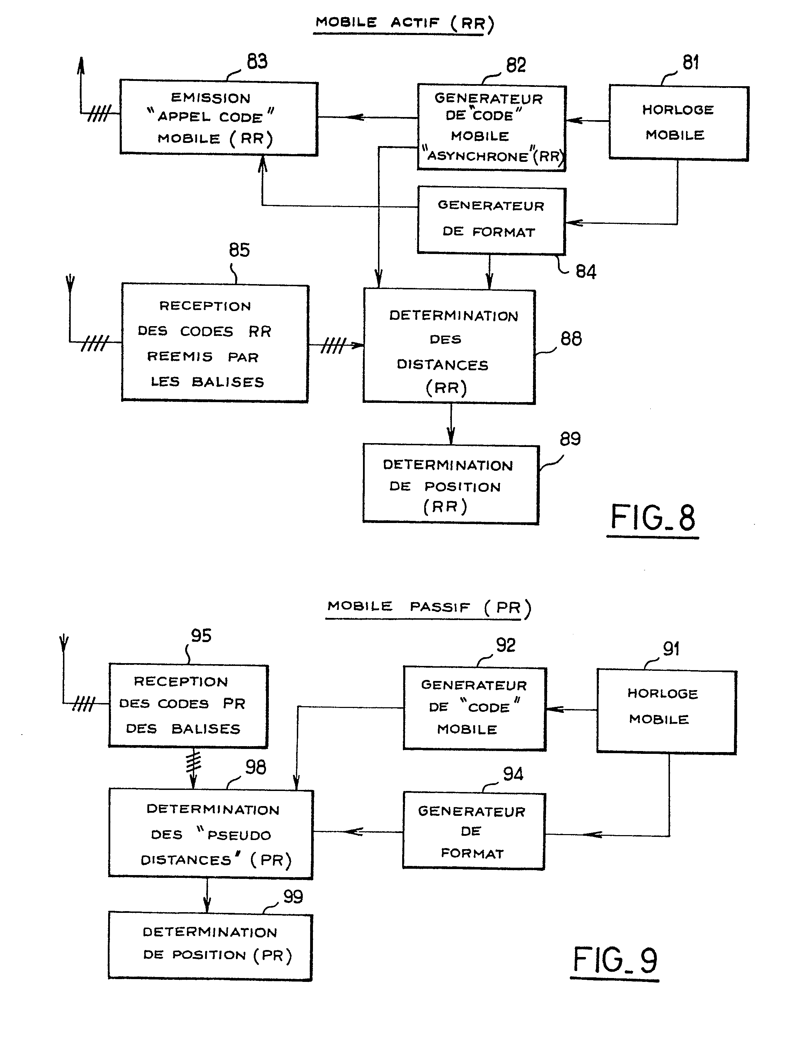

Un mobile, actif (figure 8) ou passif (figure 9) possède sa propre horloge (81; respectivement 91), son propre générateur de code (82 ; 92) et son propre générateur de format (84 ; 94).

Dans un mobile actif, le circuit 83 émet le code propre du mobile (code RR ou asynchrone du générateur 82), pendant l'un des créneaux de temps C7 à C10 (figure 5). On supposera qu'il s'agit du créneau C7 et du mobile M1. Pendant les créneaux C11 à C14, ce mobile recevra les "retours" des balises B1 à B4 dans le circuit 85. Ces retours sont identifiables à l'aide du générateur de format 84. Le circuit 88 détermine alors les distances vraies ou RR entre le mobile M1 et les balises B1 à B4. Enfin le circuit 89 en déduit la position du mobile en coordonnées géodésiques selon un système géodésique choisi. La position est déterminée à l'intérieur d'une "ellipse d'erreur probable" (ou contour d'incertitude du second type) qui dépend de la précision des mesures, du nombre de celles-ci (ici quatre balises et quatre mesures, alors que seulement deux sont nécessaires), ainsi que de l'existence d'anomalies éventuelles dans la propagation des radio-signaux.

0084004

Dans un mobile passif tel que Mn (figure 9), le circuit 95 reçoit les codes asynchrones ou PR des balises, pendant les créneaux C3 à C6. Le circuit 98 les identifie sous le contrôle du générateur de format 94, et, par comparaison au code local (92) en déduit les "pseudo-distances" PR du mobile Mn vis à vis des quatre balises. Après cela, le circuit 99 en déduit la position du mobile en coordonnées géodésiques selon un système géodésique choisi. La position est déterminée à l'intérieur d'"une ellipse d'erreur probable" (contour d'incertitude du premier type) qui dépend, en plus des facteurs précités pour le mode RR, de la distance du mobile aux balises et de la géométrie formée par le mobile et les quatre balises. Le cas le plus défavorable est celui où le mobile "voit" l'ensemble des balises sous un angle faible. L'ellipse d'erreur est alors nettement plus grande que l'ellipse d'erreur du mode RR (pour une probalité donnée d'être à l'intérieur de l'ellipse).

Dans le cas préférentiel des codes pseudo-aléatoires, la mesure de leur temps de réception se fait par corrélation avec une réplique locale du code, et décalage temporel de cette réplique jusqu'à obtenir la coïncidence de celle-ci avec le code reçu.

D'autres détails sur cette application préférentielle, sont disponibles dans le brevet français N° 73 37 740, au nom de la demanderesse, publié sous le numéro 2 248 517. On notera en particulier sa figure 15, qui illustre un mode à mobiles actifs, et sa figure 16, qui illustre un mode à mobiles passifs. Le contenu descriptif de ce brevet antérieur est à considérer comme incorporé à la présente description, pour servir en tant que de besoin à la compléter et à définir l'invention plus en détail.

Le brevet antérieur montre, en particulier, par quels moyens on arrive finalement à des mesures de décalage temporel (en 331A et B, figure 7 du brevet antérieur). L'homme de l'art connaît d'autres manières
d'arriver à des mesures de décalage temporel, en particulier lorsque les marques-temps sont autres qu'un code
pseudo-aléatoire.

On s'intéressera maintenant au traitement des
mesures de décalage temporel, qui représentent des distances dans le cas d'un mobile actif ou des pseudo-
distances dans le cas d'un mobile passif.

Mobile actif (traitement circulaire)

On note $RR_i$ l'équivalent distance du temps écoulé
entre l'émission d'appel de la marque-temps par le mobile
et la marque-temps émise en réponse de la balise $B_i$ (ce temps
est réduit à la fraction de période de la marque-temps qu'il
contient, comme le sait l'homme de l'art). Il vient

$$RR_i = 2 R_i + e_i$$

où $R_i$ désigne la distance du mobile à la balise $B_i$, et $e_i$
l'erreur de mesure.

Connaissant la distance à deux balises, on peut
déterminer la position du mobile. Avec plus de deux balises, on améliore la précision.

Ce traitement est assez simple, car les distances $R_i$ sont accessibles immédiatement, de même que
l'effet des erreurs de mesure sur ces distances.

Mobile passif (traitements hyperbolique et pseudodistance PR)

Sur la figure 9, on voit que le mobile passif
(Mn) détermine, pour chaque balise, l'écart entre le code
reçu de cette balise et le code local (générateur 92) lié
à l'horloge 91 du mobile. On notera $R_{12}$, $R_{13}$ et $R_{14}$ les
distances entre les balises B2 à B4 et la balise maîtresse
B1 ; $PR_1$, $PR_2$, $PR_3$ et $PR_4$ les équivalents-distance des
écarts temporels entre les codes reçus des quatre balises
et l'horloge du mobile ; $R_1$, $R_2$, $R_3$ et $R_4$ les distances
inconnues des quatre balises au mobile ; et enfin $D_o$ l'équi-
valent-distance de l'écart temporel entre l'horloge du mobile
et l'horloge maîtresse. Il vient (figure 1) :

$$PR_1 = R_1 + D_o + e_1$$
$$PR_2 = R_2 + R_{12} + D_o + e_2$$
$$PR_3 = R_3 + R_{13} + D_o + e_3$$
$$PR_4 = R_4 + R_{14} + D_o + e_4$$

où $e_1$ à $e_4$ désignent les erreurs de mesure.

Les termes $R_{12}$ à $R_{14}$ sont connus, et l'on peut même synchroniser les balises en coïncidence temporelle rigoureuse, ce qui annule lesdits termes. Autrement, on en tient compte dans le récepteur du mobile. Il reste (en annulant ces termes) :

$$PR_1 = R_1 + D_o + e_1$$
$$PR_2 = R_2 + D_o + e_2$$
$$PR_3 = R_3 + D_o + e_3$$
$$PR_4 = R_4 + D_o + e_4$$

Le traitement des mesures dit "hyperbolique" consiste à les soustraire par paires, par exemple

$$PR_1 - PR_2 = R_1 - R_2 + (e_1 - e_2)$$
$$PR_3 - PR_4 = R_3 - R_4 + (e_3 - e_4)$$

L'homme de l'art sait que la position du mobile se détermine alors par l'intersection de deux hyperboles (lieu des points dont la différence des distances à deux balises est la même).

Il apparaît alors l'inconvénient que, l'écartement des hyperboles augmentant avec la distance aux balises, la précision de détermination de la position du mobile due aux erreurs de mesures s'en trouve affectée, en particulier lorsque le mobile "voit" l'ensemble des balises sous un angle faible.

On observe aussi qu'après avoir déterminé ainsi la position du mobile, on peut déterminer aussi l'écart d'horloge $D_o$. Il en est de même si, à un instant donné, le mobile passe en une position connue.

Le traitement pseudo-distances (PR) part de l'observation que de toutes les inconnues, la plus facilement "prévisible" est l'écart d'horloge $D_o$. Cette

grandeur est beaucoup plus stable que la position du
mobile, et sa variation ne dépend que de la qualité des
horloges utilisées dans la balise maîtresse et dans le
mobile, et pas des mouvements du mobile. On peut donc la
déterminer, la filtrer sur un temps assez long, et
l'utiliser comme mesure supplémentaire lors du traitement
de nouvelles mesures PR des balises.

Un tel traitement "pseudo-distances" (ou
"pseudo-range") est utilisé dans le récepteur passif
Syledis SR3 fabriqué et commercialisé par la demanderesse.

A la base, ce récepteur SR3 utilise, de manière
connue, une transformation entre les coordonnées mesurées,
et les coordonnées de position désirées. Celles-ci comprennent la latitude, assortie d'une erreur résiduelle
dite erreur Nord et notée N, la longitude,assortie d'une
erreur résiduelle dite erreur Est et notée E, ainsi que
le temps, assorti d'une erreur résiduelle (à l'égard de
l'horloge maîtresse), notée erreur pilote P et mesurée
en équivalent-distance.

Si l'on note $c_j$ et $s_j$ les cosinus et sinus de
l'azimuth de la balise $B_j$ et $d_j$ l'apport d'une nouvelle mesure faite sur cette balise, c'est-à-dire la différence
entre la nouvelle mesure faite sur la balise $B_j$ et la distance que l'on peut s'attendre à recevoir fruit des mesures
précédentes, il vient la relation (I), (donnée en annexe,
de même que toutes les autres relations utilisées ci-après)
où $e_j$ désigne la matrice des "bruits", dont les variances $\sigma_j^2$
sont indépendantes entre les différentes balises.

Le récepteur Syledis SR3 réalise ainsi un filtrage dit de "Kalman", dans lequel on détermine l'effet
de chaque jeu de nouvelles mesures en considérant que
l'erreur pilote est la plus stable.

Le filtre de Kalman utilise un modèle dynamique
fondé sur une matrice de transition A. Le comportement
du "vecteur d'état" $\underline{x}$ du mobile (matrice unicolonne de coordonnées de position + temps) est alors décrit par la relation II, où $\underline{x}_t$ désigne le vecteur d'état à l'instant t, $\underline{x}_{t+T}$ désigne le vecteur d'état à l'instant t+T et $\underline{w}_t$ désigne le vecteur "bruit de modèle" à l'instant t.

On note maintenant Q la matrice de covariance du bruit de modèle $\underline{w}_t$, et $\hat{M}_t$ la matrice de covariance des erreurs d'estimation sur $\underline{x}$ au temps t.

L'état $\underline{x}$ peut alors être prédit T unités de temps plus tard par les relations III (la relation II sans le bruit de modèle, dont l'effet est inconnu) et IV, qui définit la covariance des erreurs en résultant.

L'astérisque indique une valeur prédite, et l'accent circonflexe indique le fruit combiné des mesures et prédictions précédentes, tandis que l'exposant T indique une matrice transposée. Les relations III et IV sont nommées équations de prédiction du modèle dynamique.

En général, le filtrage de Kalman fait aussi intervenir une équation linéaire de mesure V, qui relie des mesures effectuées ($\underline{y}$) au vecteur d'état $\underline{x}$ ; où $\underline{y}$ est le vecteur des mesures, H est la matrice de mesure, $\underline{e}$ est le vecteur des bruits affectant les mesures, dont la matrice de covariance est R.

Dans un traitement évolué, tel que celui du récepteur Syledis SR3, on tient compte du fait que la surface terrestre est un géoïde, défini par des relations non linéaires du genre de la relation VI.

L'équation de mesure est alors écrite, en première approximation, sous la forme différentielle de la relation I, où $d_j$, l'apport différentiel est $\underline{y}_t - \underline{f}(t, \underline{x}^*)$ H est la matrice uniligne $(-c_j -s_j -1)$ et x est la matrice unicolonne (N, E, P). A partir de ces mesures, on effectue un recalage des valeurs prédites, selon les relations VII à IX, où $K_t$ est le gain de recalage, défini par la relation IX dans laquelle l'exposant -1 indique une matrice inverse.

Le récepteur Syledis SR3 utilise un tel filtrage de Kalman pour traiter des mesures de pseudo-distances (ou pseudo-range PR) afin d'en déduire la position du mobile qui le porte, et son écart d'horloge (P) à l'égard des balises maîtresses. La programmation de ce filtrage fait intervenir essentiellement des opérations d'algèbre matricielle linéaire, que l'homme de l'art peut donc reproduire à partir des connaissances informatiques actuelles.

Après ce traitement "pseudo-distance" (PR), on obtient donc des informations de position, assorties d'un contour d'incertitude qui demeure plus étendu que celui d'un traitement distance-distance (RR) sur les mêmes balises, toutes choses égales par ailleurs.

Comme précédemment indiqué, la demanderesse a trouvé qu'en faisant une mesure RR sur l'une des balises, on peut mesurer directement l'écart d'horloge (terme P), et par conséquent bénéficier, pour les autres mesures PR de précisions sensiblement égales à celles de mesures RR faites sur toutes les balises.

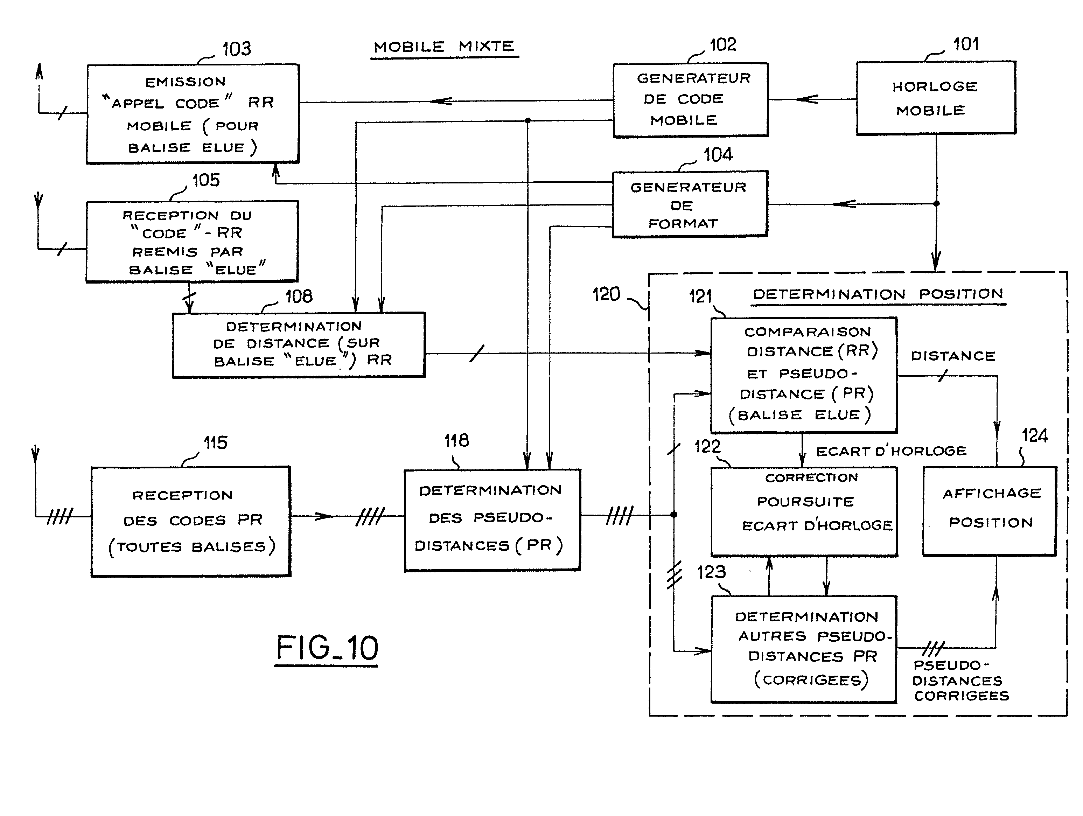

On décrira maintenant en référence à la figure 10 la structure générale du récepteur selon l'invention.

A partir de son horloge propre 101, le mobile engendre son code pseudo-aléatoire en 102, et le circuit d'émission 103 envoie un radio-signal d'appel en mode RR en direction de l'une des balises, que l'on supposera être la balise B1. Cette émission s'effectue pendant un créneau particulier, défini par le générateur de format 104, commandé également par l'horloge 101.

Le circuit 105 reçoit le radio-signal retour RR réémis par la balise "élue" B1. Le circuit 108 relié au circuit 105, ainsi qu'au générateur de format 104 effectue une détermination de distance de type RR entre le mobile et la balise élue B1.

Par ailleurs, un autre circuit de réception 115, qui peut d'ailleurs se confondre avec le circuit 105, reçoit les codes synchrones, c'est-à-dire de type PR, provenant de toutes les balises. D'après la sortie du circuit 115, un circuit 118 détermine les pseudo-distances ou mesures PR du mobile à l'égard de chacune des balises B1 à B4. Pour déterminer les créneaux correspondant à chacune des balises, le circuit 118 est relié au générateur de format 104. Pour déterminer l'écart temporel entre chaque code reçu et le code local du mobile, le circuit 118 est relié au générateur de code mobile 102.

Comme précédemment indiqué, les mesures de décalage temporel se font d'une manière qui peut varier suivant la nature de la marque-temps utilisée. Pour des codes pseudo-aléatoires, on procède avantageusement par corrélation entre le code local du générateur 102 et le code reçu en provenance des balises. Ceci est valable aussi bien pour le circuit 108 que pour le circuit 118.

Le bloc 120 encadré par un trait tireté long effectue la détermination de position. La figure 10 en donne le schéma de principe. On notera au passage que les lignes de signal de la figure 10 sont marquées par des traits transversaux indiquant pour chaque ligne le nombre de balises qu'elle traite.

Le bloc 120 comporte tout d'abord un bloc 121 qui va comparer la distance de type RR et la pseudo-distance de type PR obtenue sur la balise élue. De cette comparaison, on tire la distance du mobile à la balise élue B1, distance qui est transmise directement au bloc d'affichage de position 124. On en tire également l'écart entre l'horloge du mobile et l'horloge maîtresse des balises. Cette information est transmise au bloc 122 qui va réaliser une poursuite de cet écart, avec un filtrage convenable compte tenu de la stabilité -connue- de l'horloge du mobile.

A chaque paire de mesures RR et PR sur la balise B1, on effectue une nouvelle détermination sur l'écart d'horloge, et la mesure est ainsi filtrée, de façon à distinguer l'évolution à long terme de l'écart d'horloge des fluctuations résultant des bruits de mesures (asservissement sur l'écart d'horloge).

0084004

L'écart d'horloge étant ainsi connu avec une bonne précision, le bloc 123 peut alors déterminer des pseudo-distances corrigées sur les autres stations B2 à B4, pseudo-distance qui possèdent une précision comparable à celle d'une distance vraie, de type RR.

On notera par ailleurs que les pseudo-distances procurent ici, avec quatre balises, une redondance d'informations quant à la position du mobile. En elles-mêmes, les mesures de pseudo-distances vont donc également permettre d'accéder à l'écart d'horloge, et dans ce cas le bloc 123 est également relié au bloc 122 afin de contribuer à la poursuite de cet écart d'horloge.

Finalement, le bloc 124 détermine et affiche la position du mobile contenu dans l'ensemble des mesures disponibles.

L'ensemble des moyens 120 peut être réalisé sous forme de matériel, comme le comprendra l'homme de l'art.

De préférence, il est réalisé sous forme de traitement numérique avec logiciel et microprocesseur, d'une façon qui sera décrite ci-après.

En effet, de façon assez inattendue, il a également été observé que le traitement des mesures PR décrit plus haut à propos du récepteur Syledis SR3, n'a besoin que de petites modifications pour assimiler, en plus des mesures PR sur toutes les balises, une mesure RR sur l'une des balises (voire plusieurs mesures RR).

L'équation de mesure globale est alors (B$_1$ étant la balise avec mesure RR) la relation X, où l'exposant RR indique une mesure distance-distance, et l'exposant PR une mesure pseudo-distance.

Et la matrice de covariance des bruits est donnée par la relation XI, où les $\sigma^2$ sont des variances et les $\sigma$ des écarts types, tandis que $\rho_1$ désigne le coefficient de corrélation entre le bruit RR et le bruit PR sur la même balise (ces deux mesures sont corrélées par le fait que le trajet de propagation des ondes se trouve pratiquement le même).

Condensée sous forme matricielle, l'équation X a p pour solution la valeur $\underline{\hat{x}}$ de la relation XII dont la matrice de covariance $M_{\hat{x}}$ est donnée par la relation XIII. Or, compte tenu du fait qu'une seule balise est élue pour retransmettre des indications RR en plus des indications PR, la matrice R de la relation XI est aisément inversible, puisque constituée d'un bloc $R_1$ et de la diagonale principale, tous les autres éléments étant nuls.

On détermine alors aisément $H^T R^{-1} H$, de même que $H^T R^{-1} \underline{d}$, qui peuvent s'écrire selon les relations XIV et XV, où l'indice i désigne les différents blocs de mesure (et de matrices associées) dont les covariances sont indépendantes les unes des autres : par des opérations matricielles simples, on calcule l'information amenée par chaque bloc, et l'on somme selon les relations XIV et XV.

Après cela l'inversion d'une matrice carrée 3 x 3 donne la covariance de l'estimation (nouvelle valeur) et son produit par $H^T R^{-1}$ donne les coefficients de pondération de chaque mesure $d_i$ (voir la relation XII).

On voit que la différence essentielle entre le traitement de mesures PR pures et le traitement requis selon l'invention pour utiliser en plus une mesure RR sur l'une des balises réside dans la présence du bloc matriciel 2 x 2 noté $R_1$ dans la matrice R (relation XI), au lieu du terme $\sigma_1^{2^{PR}}$ tout seul. Cela s'accompagne, naturellement, d'une ligne et d'une colonne en plus pour la matrice. Mais les opérations mathématiques supplémentaires qui en résultent sont simples et peu nombreuses, comme le comprendra l'homme de l'art.

Par ailleurs, le filtrage de l'écart d'horloge s'adapte automatiquement aux nouvelles conditions où l'on dispose d'une estimation plus précise de l'écart d'horloge qu'avec de pures mesures PR. La constante de temps de filtrage est plus longue selon la présente invention.

En effet, en retournant à la relation IX, il

apparaît que les éléments de la matrice de gain sont définis comme le rapport de la variance du bruit de modèle à la somme des variances du bruit de mesure et du bruit de modèle.

Avec les mesures mixtes de l'invention, le bruit de modèle pour l'erreur pilote P est plus faible que pour les grandeurs de position (N + E). La dégradation de la connaissance de P est donc plus faible entre deux mesures qu'auparavant ; compte tenu de la relation IX, le gain produit pour l'erreur pilote un réajustement plus faible à réception de chaque nouvelle mesure, ce qui correspond à une constante de temps plus longue.

Ainsi, la présente invention propose :
- d'une part, un nouveau mode de radionavigation, avec un jeu de mesures de type PR pseudo-distances, accompagné d'une mesure RR ;
- d'autre part, en complément, une modification très simple du traitement des mesures PR, qui permet d'incorporer facilement une ou plusieurs mesures RR dans la détermination de position.

Bien entendu, on pourra aussi utiliser une balise avec seulement la mesure RR, notamment dans le cas d'une balise qui est normalement utilisée en mode mixte (RR + PR), pour laquelle l'émission PR viendrait momentanément à être insuffisamment perceptible.

Inversement, si c'est l'émission RR qui disparaît ou s'atténue trop, temporairement, le dispositif de traitement du récepteur va poursuivre le traitement sur l'ensemble des mesures PR disponibles, en s'appuyant sur le filtrage de l'écart d'horloge (qui est très stable).

Il apparaît donc finalement que les moyens de traitement des mesures avec filtrage adaptatif de Kalman qui sont ici proposés permettent, en s'appuyant sur le filtrage de l'écart d'horloge entre le mobile et la balise maîtresse, de passer de façon continue et insensible entre les situations suivantes :

- mesures de type PR sur toutes les balises et de type RR sur l'une d'entre elles, et d'autres termes mesure PR sur (n-1) balises et mesure mixte RR + PR sur la n-ième balise ;
- mesures de type PR sur certaines balises et RR sur d'autres
- mesures de type PR seulement (notamment le cas où l'émission RR de la n-ième balise devient imperceptible) ;
- mesures de type RR seulement (cas où seules deux mesures RR au plus sont disponibles).

Il est donc clair que le nouveau moyen de traitement avec filtrage adaptatif de Kalman peut s'appliquer à toutes situations de mesures évolutives ou non RR pur, PR pur et leurs combinaisons avec ou sans balises faisant l'objet de mesures mixtes (RR + PR).

On reviendra maintenant au procédé de l'invention, qui implique une mesure mixte (balise B1) et une ou plusieurs mesures PR faites sur les autres balises.

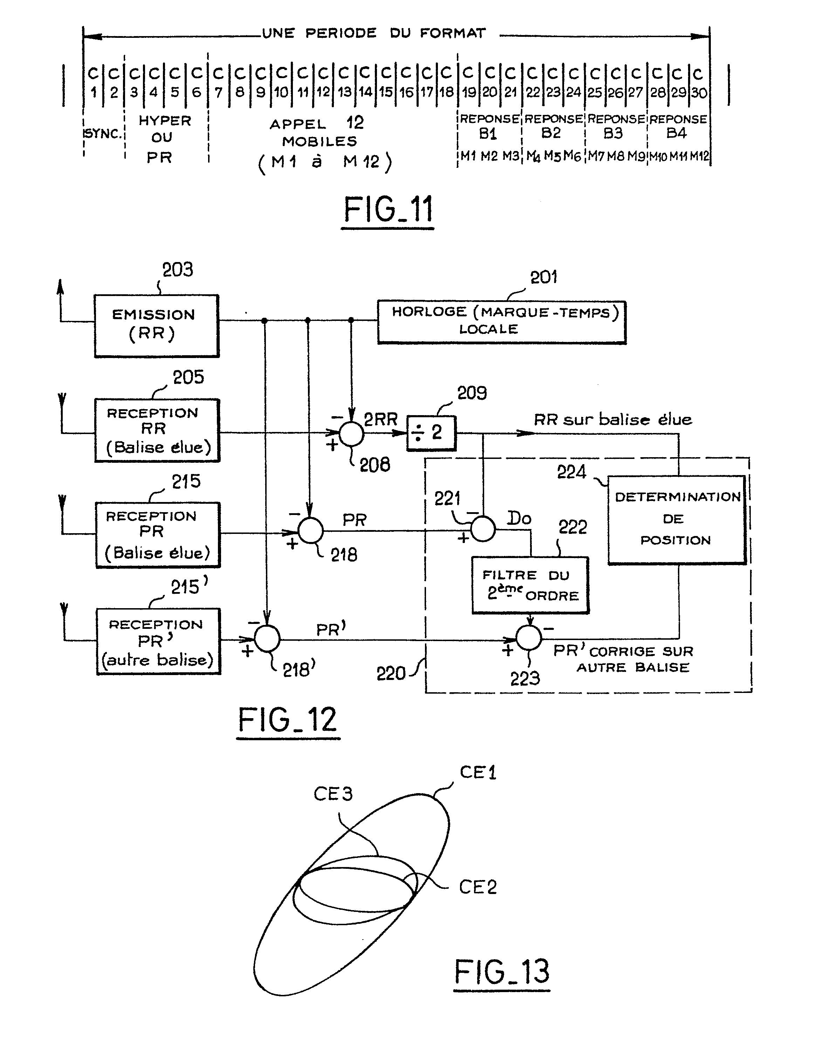

La figure 11 montre, comparée à la figure 5, les avantages de ce procédé : douze mobiles peuvent travailler avec les quatre balises, au lieu de quatre mobiles selon la technique antérieure, tout en bénéficiant d'une précision pratique tout à fait comparable.

La figure 13 fait en effet apparaître des éllipses d'erreur probables :
- CE1, pour le mode pseudo-distances pur (connu),
- CE2, pour le mode distance-distance pur (connu),
- CE3 pour le mode mixte de l'invention.

On voit immédiatement que le contour d'erreur CE3 est très proche de celui (CE2) que l'on obtient dans le mode statistiquement le plus précis de la technique antérieure.

On se référera maintenant à la figure 12, qui fait apparaître un autre mode de réalisation de l'invention, avec deux balises au sol, et des émissions balises et mobiles multiplexées en mode fréquentiel (porteuses toutes différentes).

Les éléments semblables des figures 10 et 12 diffèrent de 100 par leurs références numériques, et la figure 12 ne détaille que l'équipement d'un mobile spécifié (avec deux balises seulement, un mobile passif ne peut déterminer sa position).

L'horloge 201 fournit une marque-temps locale émise en 203 sur une première fréquence porteuse. La balise élue la renvoie sur une seconde fréquence porteuse, et le retour est reçu en 205.

En 215 et 215', le mobile reçoit, sur deux autres fréquences porteuses (ou bien en temps partagé sur la même fréquence porteuse), les radiosignaux de type PR émis par les deux balises en synchronisme de la base de temps maîtresse.

On compare les signaux de sortie des circuits 205, 215 et 215' à la marque-temps locale (comparateurs 208, 218, et 218'), ce qui donne trois mesures notées 2RR, PR et PR', respectivement. La notation 2RR tient compte du fait que la mesure représente deux fois la distance mobile-balise élue ; cette mesure est en conséquence divisée par deux en 209. Après cela, elle est soustraite en 221 de la mesure PR sur la balise élue, ce qui donne l'écart d'horloge $D_o$, lequel est alors soumis en 222 à un filtrage du second ordre. Enfin, un autre comparateur 223 corrige la mesure PR' venant du comparateur 218' selon $D_o$ filtré. Après cela, on détermine la position à partir de la mesure RR sur la balise élue, et de la mesure PR' corrigée sur l'autre balise, en considérant les deux mesures comme étant de type RR.

Bien entendu, on pourra utiliser plus de deux balises, ce qui permet d'affiner la détermination de l'écart d'horloge. A partir de quatre balises, le mobile peut déterminer l'écart d'horloge à partir de la seule redondance entre les quatre mesures PR qu'il effectue, puisque trois mesures PR suffisent à la détermination de position.

Enfin, en ce qui concerne l'organisation du dialogue entre les mobiles spécifiés et les balises, les moyens de la technique antérieure sont utilisables. L'homme de l'art saura facilement les modifier pour passer de la séquence de créneaux-temps de la figure 5 à celle de la figure 11 (multiplexage temporel). Pour un multiplexage fréquentiel (en tout ou en partie) il suffit d'ajuster les fréquences d'émission et de réception
en conséquence.

ANNEXE - RELATIONS -A-

$$(I) \quad \begin{bmatrix} d_1 \\ d_2 \\ d_3 \\ d_4 \end{bmatrix} = \begin{bmatrix} -c_1 & -s_1 & 1 \\ -c_2 & -s_2 & 1 \\ -c_3 & -s_3 & 1 \\ -c_4 & -s_4 & 1 \end{bmatrix} \begin{bmatrix} N \\ E \\ P \end{bmatrix} + \begin{bmatrix} e_1 \\ e_2 \\ e_3 \\ e_4 \end{bmatrix}$$

$$\text{ou} \quad (I) \quad \underline{d}_j = \begin{bmatrix} -c_j & -s_j' & 1 \end{bmatrix} \begin{bmatrix} N \\ E \\ P \end{bmatrix} + \underline{e}_j$$

$$(II) \quad \underline{x}_{t+T} = A \cdot \underline{x}_t + \underline{w}_t$$

$$(III) \quad \underline{x}^*_{t+T} = A \cdot \hat{\underline{x}}_t$$

$$(IV) \quad M^*_{t+T} = A \cdot \hat{M}_x \cdot A^T + Q$$

$$(V) \quad \underline{Y} = H \cdot \underline{x} + \underline{e}$$

$$(VI) \quad \underline{Y}_t = f(t, x_t) + \underline{e}_t$$

$$(VII) \quad \hat{x}_t = x^*_t + K_t \cdot \underline{d}_j$$

$$(VII) \quad \hat{M}_t = M^*_t - K_t \cdot H \cdot M^*_t$$

$$(IX) \quad K_t = M^*_t \cdot H_t^T (H \cdot M^*_t \cdot H^T + R)^{-1}$$

## ANNEXE - RELATIONS -B-

$$(X) \quad \begin{vmatrix} d_1^{RR} \\ d_1^{PR} \\ d_2^{PR} \\ d_3^{PR} \\ d_4^{PR} \end{vmatrix} = \begin{vmatrix} -c_1 & -s_1 & 0 \\ -c_1 & -s_1 & 1 \\ -c_2 & -s_2 & 1 \\ -c_3 & -s_3 & 1 \\ -c_4 & -s_4 & 1 \end{vmatrix} \cdot \begin{vmatrix} N \\ E \\ P \end{vmatrix} + \begin{vmatrix} e_1^{RR} \\ e_1^{PR} \\ e_2^{PR} \\ e_3^{PR} \\ e_4^{PR} \end{vmatrix}$$

$$\text{ou } (X) \quad \underline{d} = H \quad \underline{x} + \underline{e}$$

$$(XI) \quad R = \begin{vmatrix} \sigma_1^{2\,RR} & \rho_1 \sigma_1^{RR} \sigma_1^{PR} & 0 & 0 & 0 \\ \rho_1 \sigma_1^{RR} \sigma_1^{PR} & \sigma_1^{2\,PR} & 0 & 0 & 0 \\ 0 & 0 & \sigma_2^{2\,PR} & 0 & 0 \\ 0 & 0 & 0 & \sigma_3^{2\,PR} & 0 \\ 0 & 0 & 0 & 0 & \sigma_4^{2\,PR} \end{vmatrix} \quad R_1$$

$$(XII) \quad \underline{\hat{x}} = (H^T R^{-1} H)^{-1} \cdot H^T R^{-1} \underline{d}$$

$$(XIII) \quad M_{\hat{x}} = (H^T R^{-1} H)$$

$$(XIV) \quad H^T R^{-1} H = \sum_{i=1}^{k} H_i^T R_i^{-1} H_i$$

$$(XV) \quad H^T R^{-1} \underline{d} = \sum_{i=1}^{k} H_i^T R_i^{-1} \underline{d}_i$$

## REVENDICATIONS

1. Procédé de radionavigation, dans lequel :

- des balises émettent, de façon identifiable individuellement par multiplexage temporel et/ou fréquentiel, des radio-signaux "synchrones", c'est-à-dire définissant des marques-temps rapportées à une horloge maîtresse commune, tandis que tout mobile peut recevoir et identifier ces radio-signaux synchrones, en déduire ses pseudodistances à l'égard des balises, et par là déterminer sa position sous réserve d'un contour d'incertitude d'un premier type, et.

- il est prévu, de façon également identifiable individuellement par multiplexage temporel et/ou fréquentiel, un dialogue pré-organisé de radio-signaux appel-retour "asynchrones" entre un nombre limité de mobiles spécifiés et les balises, dialogue où chaque mobile spécifié émet un radio-signal d'appel définissant une marque-temps qui lui est propre,où chaque balise répond , à son tour, par un radio-signal retour définissant une marque-temps liée à celle qu'elle a reçue du mobile spécifié concerné, puis où chaque mobile spécifié reçoit les marques-temps retour qui le concernent, en déduit sa distance à chacune des balises, puis sa position, sous réserve d'un contour d'incertitude d'un second type généralement plus petit que le premier,

caractérisé par le fait que, d'une manière prévue à l'avance, une seule des balises répond à chaque mobile spécifié, que chaque mobile spécifié reçoit le radio-signal retour de cette balise et les radio-signaux synchrones de certaines au moins des balises, que ledit mobile compare sa distance et sa pseudo-distance à l'égard de la même balise pour obtenir son écart d'horloge par rapport à l'horloge maîtresse, puis corrige en conséquence la position donnée par l'ensemble des pseudo-distances, la position corrigée étant alors assortie d'un contour d'incertitude comparable à celui du second type, ce qui permet,à précision sensiblement constante, et pour un encombrement donné de l'éther en temps et en spectre de fréquences, de multiplier le nombre des mobiles spécifiés admis à travailler conjointement avec les balises.

2. Procédé de radionavigation selon la revendication 1, caractérisé par le fait qu'il est prévu au moins deux balises, dont une seulement répond à l'interrogation asynchrone d'un mobile spécifié.

3. Procédé de radionavigation selon l'une des revendications 1 et 2, caractérisé par le fait qu'une partie au moins des émissions se fait sur la même fréquence porteuse, utilisée en temps partagé selon une séquence de créneaux temps prédéterminée et répétitive.

4. Procédé de radionavigation selon l'une des revendications 1 à 3, caractérisé par le fait qu'une partie au moins des émissions se fait sur des fréquences porteuses différentes, dont l'affectation est connue à l'avance.

5. Procédé de radionavigation selon l'une des revendications 1 à 4, caractérisé par le fait que ladite marque-temps est la phase du radio-signal.

6. Procédé de radionavigation selon l'une des revendications 1 à 4, caractérisé par le fait que ladite marque-temps est définie par une modulation prédéterminée du radio-signal.

7. Procédé de radionavigation selon la revendication 6, caractérisé par le fait que ladite modulation est une modulation en impulsions.

8. Procédé de radionavigation selon la revendication 6, caractérisé par le fait que ladite modulation est une modulation par sauts ou variation de phase selon un code préétabli.

9. Procédé de radionavigation selon l'une des revendications 1 à 8, caractérisé par le fait que l'on prévoit au moins quatre balises, et que chaque mobile effectue en outre une détermination de son écart d'horloge par rapport à l'horloge maîtresse à partir de la redondance dans les mesures faites sur les radio-signaux synchrones.

10. Equipement de radionavigation pour mobile, permettant la mise en oeuvre du procédé de l'une des revendications 1 à 9, avec au moins deux balises capables d'émettre distinctement des radio-signaux synchrones définissant des marques-temps rapportées à une horloge maîtresse commune, tandis que l'une au moins des balises est apte à fonctionner en répondeur, ledit équipement de mobile comportant :

- une horloge locale (101 ; 201)

- des moyens de réception radiofréquence, (115 ; 215 ; 215') agencés pour restituer sélectivement les marques-temps selon leur origine et leur nature

- des moyens (118 ; 218, 218') pour mesurer des pseudo-distances à partir de l'écart entre chacune des marques-temps reçues sur des radio-signaux synchrones et l'horloge locale du mobile, et

- des moyens de traitement (120 ; 220) pour définir la position du mobile à partir de ces pseudo-distances, caractérisé par le fait que l'équipement comporte en outre des moyens d'émission radio-fréquence (103 ; 203) aptes à produire un radio-signal d'appel distinct définissant une marque-temps d'appel propre au mobile,

par le fait que les moyens de réception sont également agencés (105 ; 205) pour restituer sélectivement la marque-temps retour renvoyée par la balise répondeuse par le fait que sont prévus des moyens (108 ; 208) pour mesurer la distance du mobile à l'égard de la balise répondeuse, à partir de l'écart entre la marque-temps d'appel et la marque-temps retour,

par le fait que les moyens de traitement comportent des moyens (121 ; 221) pour comparer la distance et la pseudo-distance à l'égard de la balise répondeuse, pour en déduire (122 ; 222) l'écart entre l'horloge locale et l'horloge maîtresse, et pour corriger (123 ; 223) en conséquence les pseudo-distances, ce qui permet une meilleure précision dans la détermination de position (124 ; 224) .

11. Equipement de mobile selon la revendication 10, caractérisé par le fait que la marque-temps d'appel est liée à l'horloge locale du mobile.

12. Equipement de mobile selon l'une des revendications 10 et 11, caractérisé par le fait qu'il comporte un générateur de format (104) apte à définir une séquence de créneaux-temps répétitive à temps fixe, et qu'une partie au moins des émissions et réceptions de radiosignaux sont identifiés par les créneaux-temps qu'elles occupent.

13. Equipement de mobile selon l'une des revendications 10 à 12, caractérisé par le fait qu'une partie au moins des émissions est identifiée par sa fréquence porteuse, les moyens de réception étant accordés en conséquence.

14. Equipement de mobile selon l'une des revendications 10 à 13, caractérisé par le fait qu'il comporte un générateur de code (102) apte à définir une marque-temps locale codée.

15. Equipement de mobile selon l'une des revendications 10 à 14, caractérisé par le fait qu'il comporte des moyens de filtrage du second ordre (222) de l'écart temporel $(D_O)$ entre l'horloge locale et l'horloge maîtresse, et que les pseudo-distances sont corrigées selon l'écart temporel $(D_O)$ filtré.

16. Equipement de mobile selon l'une des revendications 10 à 12, 14 et 15, caractérisé par le fait que les moyens de réception et d'émission sont accordés sur une unique fréquence porteuse, tandis qu'un générateur de format définit une séquence de créneaux-temps répétitive prédéterminée, et par le fait que les moyens de réception de la marque-temps retour sont actifs pendant un seul créneau-temps de la séquence.

17. Equipement de mobile selon l'une des revendications 1 à 16, caractérisé par le fait que les marques-temps sont définies par la phase des radiosignaux.

18. Equipement de mobile selon l'une des revendications 1 à 16, caractérisé par le fait que les marques-temps sont définies par une modulation prédéterminée des radio-signaux.

19. Equipement de mobile selon la revendication 18, caractérisé par le fait que ladite modulation est une modulation en impulsions.

20. Equipement de mobile selon la revendication 18, caractérisé par le fait que ladite modulation est une modulation par sauts ou variation de phase selon un code préétabli.

21. Equipement de mobile selon l'une des revendications 10 à 20, caractérisé par le fait que le mobile reçoit les radio-signaux synchrones d'au moins quatre balises, et que les moyens de traitement effectuent en outre une détermination de l'écart d'horloge par rapport à l'horloge maîtresse à partir de la redondance dans les mesures faites sur les radiosignaux synchrones.

22. Equipement de mobile selon l'une des revendications 10 à 21, caractérisé par le fait que les moyens de traitement comprennent des moyens de filtrage de Kalman adaptatif, comportant des moyens de modélisation dynamique du mouvement du mobile, des moyens de transformation des valeurs de mesures de distances en un vecteur d'état comprenant des coordonnées de position du mobile et d'écart temporel de son horloge propre à l'égard de l'horloge maîtresse, et des moyens de recalage des valeurs prédites selon le modèle dynamique en fonction des valeurs mesurées.

CC84004

1/6

FIG_1

FIG_2A

FIG_2B

PHASE 0
PHASE π

FIG_2C

FREQUENCE PURE — FIG_3A

COMMANDE MODULATION — FIG_3B

INVERSION DE PHASE — FIG_3C

0084004

### FIG_4A

40 HORLOGE → 41 SYNTHESE DE FREQUENCE → 42 FILTRE → 43 AMPLI EMISSION → 44 ANTENNE

### FIG_4B

40 HORLOGE → 41B SYNTHESE DE FREQUENCE → 42 FILTRE (PORTEUSE) → 43B EMISSION IMPULSIONS → 44 ANTENNE

COMMANDE DES IMPULSIONS

### FIG_4C

40 HORLOGE → 41C SYNTHESE DE FREQUENCE → 42 FILTRE (PORTEUSE) → 43C EMISSION A MODULATION DE PHASE → 44 ANTENNE

HORLOGE

44 REGISTRE A DECALAGE (7 CELLULES BINAIRES, P. EX)

45

CODE PSEUDO-ALEATOIRE

### FIG_5

UNE PERIODE DU FORMAT

| C 1 | C 2 | C 3 | C 4 | C 5 | C 6 | C 7 | C 8 | C 9 | C 10 | C 11 | C 12 | C 13 | C 14 | C 15 | C 16 | C 17 | C 18 | C 19 | C 20 | C 21 | C 22 | C 23 | C 24 | C 25 | C 26 | C 27 | C 28 | C 29 | C 30 |

SYNC. | HYPERBOL OU PR | APPEL (4 MOBILES) | MOBILE n° 1 | MOBILE n° 2 | MOBILE n° 3 | MOBILE n° 4 | SERVICE

REPONSES DES 4 BALISES AUX 4 MOBILES

TEMPS

(TECHNIQUE ANTERIEURE)

**BALISE MAITRESSE B1**

FIG.6

**BALISE ESCLAVE B2 (ou B3, B4)**

FIG.7

0084004

MOBILE ACTIF (RR)

```
                                                         81
 83                        82                           ┌──────────┐
┌──────────────┐          ┌──────────────┐              │ HORLOGE  │
│  EMISSION    │◄─────────│ GENERATEUR   │◄─────────────│ MOBILE   │
│"APPEL CODE"  │          │ DE "CODE"    │              └──────────┘
│ MOBILE (RR)  │          │ MOBILE       │
└──────────────┘          │"ASYNCHRONE"(RR)│
                          └──────────────┘
                                          ┌──────────────┐
                                          │ GENERATEUR   │◄──────
                                          │ DE FORMAT    │
                                          └──────────────┘
                                                  84
 85                                        88
┌──────────────┐          ┌──────────────┐
│  RECEPTION   │          │ DETERMINATION│
│ DES CODES RR │─────────►│     DES      │
│ REEMIS PAR   │          │  DISTANCES   │
│ LES BALISES  │          │    (RR)      │
└──────────────┘          └──────────────┘
                                  │
                                  ▼      89
                          ┌──────────────┐
                          │ DETERMINATION│
                          │ DE POSITION  │
                          │    (RR)      │
                          └──────────────┘
```

FIG_8

MOBILE PASSIF (PR)

```
 95                        92                            91
┌──────────────┐          ┌──────────────┐              ┌──────────┐
│  RECEPTION   │          │ GENERATEUR   │              │ HORLOGE  │
│ DES CODES PR │◄─────────│ DE "CODE"    │◄─────────────│ MOBILE   │
│ DES BALISES  │          │ MOBILE       │              └──────────┘
└──────────────┘          └──────────────┘
        │           98
        ▼      ┌──────────────┐          ┌──────────────┐
               │ DETERMINATION│          │ GENERATEUR   │
               │ DES "PSEUDO  │◄─────────│ DE           │◄──────
               │ DISTANCES"(PR)│         │ FORMAT       │
               └──────────────┘          └──────────────┘
                       │                        94
                       ▼  99
               ┌──────────────┐
               │ DETERMINATION│
               │ DE POSITION (PR)│
               └──────────────┘
```

FIG_9

FIG_10

MOBILE MIXTE

**103** — EMISSION "APPEL CODE" RR MOBILE (POUR BALISE ELUE)

**102** — GENERATEUR DE CODE MOBILE

**101** — HORLOGE MOBILE

**105** — RECEPTION DU "CODE"-RR REEMIS PAR BALISE "ELUE"

**104** — GENERATEUR DE FORMAT

**108** — DETERMINATION DE DISTANCE (SUR BALISE "ELUE") RR

**120** — DETERMINATION POSITION

**121** — COMPARAISON DISTANCE (RR) ET PSEUDO-DISTANCE (PR) (BALISE ELUE)

DISTANCE

ECART D'HORLOGE

**122** — CORRECTION POURSUITE ECART D'HORLOGE

**124** — AFFICHAGE POSITION

**115** — RECEPTION DES CODES PR (TOUTES BALISES)

**118** — DETERMINATION DES PSEUDO-DISTANCES (PR)

**123** — DETERMINATION AUTRES PSEUDO-DISTANCES PR (CORRIGEES)

PSEUDO-DISTANCES CORRIGEES

5/6

UNE PERIODE DU FORMAT

| C 1 | C 2 | C 3 | C 4 | C 5 | C 6 | C 7 | C 8 | C 9 | C 10 | C 11 | C 12 | C 13 | C 14 | C 15 | C 16 | C 17 | C 18 | C 19 | C 20 | C 21 | C 22 | C 23 | C 24 | C 25 | C 26 | C 27 | C 28 | C 29 | C 30 |

SYNC. | HYPER OU PR | APPEL 12 MOBILES ( M1 à M12 ) | REPONSE B1 M1 M2 M3 | REPONSE B2 M4 M5 M6 | REPONSE B3 M7 M8 M9 | REPONSE B4 M10 M11 M12

## FIG_11

203 EMISSION (RR)

201 HORLOGE (MARQUE-TEMPS) LOCALE

205 RECEPTION RR (Balise élue)

− 2RR 209 ÷ 2 — RR sur balise élue
+ 208

215 RECEPTION PR (Balise élue)

− PR 221 − Do 222 224 DETERMINATION DE POSITION
+ 218 + 222 FILTRE DU 2ème ORDRE

215' RECEPTION PR' (autre balise)

− PR' 220 − PR' CORRIGE SUR AUTRE BALISE
+ 218' + 223

## FIG_12

CE1

CE3

CE2

## FIG_13

**Office européen des brevets**

**RAPPORT DE RECHERCHE EUROPEENNE**

0084004

Numéro de la demande

EP 83 40 0025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | FR-A-2 248 517 (SERCEL) * Page 26, ligne 9 - page 27, ligne 17; figures 15,16 * | 1,2,10 | G 01 S 13/86 |
| Y | DE-B-2 844 643 (MESSERSCHMITT-BOLKOW-BLOHM) * Colonne 2, ligne 21 - colonne 4, dernière ligne; figures 1-4 * | 1,2,10 | |
| A | FR-A-2 425 776 (SERCEL) * Page 29, ligne 1 - page 32, ligne 37; figures 14-16 * | 1,10 | |
| A | FR-A-2 406 204 (GENERAL ELECTRIC) * Page 5, ligne 26 - page 11, ligne 28; figures 1,2 * | 1,10 | |
| A | US-A-4 229 737 (C.A. HELDWEIN et al.) | | |

DOMAINES TECHNIQUES RECHERCHES (Int. Cl. 3)

G 01 S
G 04 G

Le présent rapport de recherche a été établi pour toutes les revendications

| Lieu de la recherche | Date d'achèvement de la recherche | Examinateur |
|---|---|---|
| LA HAYE | 14-04-1983 | VAN WEEL E.J.G. |

CATEGORIE DES DOCUMENTS CITES

X particulièrement pertinent à lui seul
Y particulièrement pertinent en combinaison avec un autre document de la même catégorie
A arrière plan technologique
O divulgation non-écrite
P document intercalaire

T théorie ou principe à la base de l'invention
E document de brevet antérieur, mais publié à la date de dépôt ou après cette date
D cité dans la demande
L cité pour d'autres raisons

& membre de la même famille, document correspondant